# EUROPÄISCHE PATENTSCHRIFT

(11) **EP 3 152 075 B1**
(45) Veröffentlichungstag und Bekanntmachung des Hinweises auf die Patenterteilung: **01.07.2020**
(21) Anmeldenummer: 15723463.4
(22) Anmeldetag: 07.05.2015
(51) Int. Cl.: B60J 7/043

(54) **SCHIEBEDACH MIT MITTELANTRIEB UND SEITENFÜHRUNG**
SLIDING SUNROOF HAVING CENTRAL DRIVE AND LATERAL GUIDANCE
TOIT OUVRANT À COMMANDE CENTRALE ET GUIDAGE LATÉRAL

(30) Priorität: 05.06.2014 DE 102014210805
(43) Veröffentlichungstag der Anmeldung: 12.04.2017
(73) Patentinhaber: Bayerische Motoren Werke Aktiengesellschaft, 80809 München (DE)
(72) Erfinder: MINATTI, Johann, 80807 Muenchen (DE); WALTER, Alexander, 80796 Muenchen (DE)
(86) Internationale Anmeldenummer: PCT/EP2015/060122
(87) Internationale Veröffentlichungsnummer: WO 2015/185322

(56) Entgegenhaltungen:
- EP-A2- 2 700 521
- DE-A1-102008 046 331
- DE-A1-102010 039 726
- DE-A1-102012 104 280

## Beschreibung

Diese Erfindung betrifft ein öffenbares Fahrzeugdach mit einem Schiebedachdeckel, der in einem geschlossenen Zustand eine Dachöffnung verschließend angeordnet ist, wobei die Dachöffnung in einem geöffneten Zustand des Dachs zumindest teilweise offen ist, indem der Schiebedachdeckel zumindest teilweise außerhalb der Dachöffnung angeordnet ist, wobei zumindest ein zum Fahrzeugheck gerichteter hinterer Rand des Schiebedachdeckels im geschlossenen Zustand mit dem Äußeren des Fahrzeugdachs fluchtet und im geöffneten Zustand in Richtung des Fahrzeugäußeren aus der Flucht des Fahrzeugdachs gehoben ist, wobei das Fahrzeugdach zwei nicht mit dem Schiebedachdeckel verschiebbare Führungen zum Verschieben des Schiebedachdeckels aufweist, die wenigstens näherungsweise parallel zueinander und in Längsrichtung des Fahrzeugs angeordnet sind, wobei die Führungen jeweils an einem oder nahe eines der in Fahrzeuglängsrichtung verlaufenden Seitenränder des Schiebedachdeckels angeordnet sind, wobei entlang der Führungen mit dem Schiebedachdeckel bewegte Führungselemente führbar sind und wobei die Führungen zumindest abschnittsweise von der Dachöffnung aus in Richtung des Fahrzeughecks verlaufen.

Im Stand der Technik sind Schiebe-Hebe-Dächer mit Führungen an beiden Seiten des Schiebedachdeckels bekannt. Es ist auch bekannt, dass sich solche Schiebedächer nach außen über die Außenoberfläche des Daches schieben können. Dies kann mit einer sogenannten Spoiler-Mechanik mit nach hinten überstehendem Deckel realisiert werden. Am vorderen Rand des Schiebedachdeckels sind die Führungselemente angeordnet, damit der Deckel möglichst weit nach hinten überstehen kann. Nachteilig müssen die Führungselemente große Kräfte ertragen, da der Schiebedachdeckel einen langen Hebel bildet. Durch die seitliche Anordnung des Antriebs wird die mögliche Breite des Durchsichtbereichs begrenzt. Außerdem wird die Kopffreiheit eingeschränkt.

Weiter sind außenliegende Schiebedächer (ASD) mit zusätzlicher hinterer Deckelführung bekannt, welche in einer Dachfuge verläuft. Dabei ist diese hintere Deckelführung nicht wesentlich mittragend. Daher können auch hier hohe Kräfte auf die vorne angeordneten Führungselemente auftreten. Wegen der Deckelführung in der Fuge ist hinten kein mittragender Deckel möglich.

Außerdem ist aus der DE 10 2008 046 331 A1 ein Panorama-Fahrzeugdach mit einem Schiebedachdeckel bekannt, das eine außenliegende Schiebedachmechanik und einen mittragenden, feststehenden hinteren Deckel aufweist. An den seitlichen Rändern des Schiebedachdeckels ist eine Führung vorgesehen, in die Führungselemente eingreifen, die sich auf beiden Seiten und am hinteren Ende der Dachöffnung befinden. Die Führungselemente sind außerdem entlang einer feststehenden Führung neben dem hinteren Deckel verschieblich angeordnet. Das Führen dieser Führungselemente entlang ihrer feststehenden Führung führt dazu, dass der Schiebedachdeckel zunächst angehoben wird. Beim weiteren Verschieben des Schiebedachdeckels nach hinten greift dieser mit seiner mitbewegten Führung am Rand nach einer vorgegebenen Strecke in ein weiteres Führungselement ein, welches feststehend seitlich neben dem feststehenden Deckel angeordnet ist. Beim weiteren Öffnen gleitet der Schiebedachdeckel in diesem weiteren Führungselement sowie in dem beweglichen Führungselement bis in die vollständig geöffnete Stellung.

In einem anderen Panorama-Fahrzeugdach wird die Hebemechanik nach dem Anheben vom Schiebedachdeckel abgekoppelt und abgesenkt. Bei weiterer Deckeleröffnung wird die Hebemechanik unter dem feststehenden Deckel nach hinten verfahren, um eine größere Deckeleröffnung als bei einer Spoiler-Mechanik zu erreichen.

Es ist weiter bekannt, eine Hub- und Verschiebemechanik in der Fahrzeugmitte zu platzieren. Der damit verbundene Schiebedachdeckel wird zusätzlich zu seiner Befestigung an der Hub- und Verschiebemechanik an seitlichen Führungen gestützt, welche jedoch erst nach etwa einem Viertel des Verfahrwegs zum Eingriff kommen. Dies ist erforderlich, um den geöffneten Schiebedachdeckel zu stabilisieren.

Die DE 10 2010 039 726 A1 offenbart ein Fahrzeugdach mit einer mittig in Querrichtung des Fahrzeugs angeordneten Antriebsschiene und zwei separate Führungen in der Antriebsschiene. An der Antriebsschiene ist der Schiebedachdeckel befestigt und kann von einer geschlossenen Stellung in eine offene Stellung gebracht werden. An den Längsseiten der Dachöffnung ist keine Führung vorgesehen, sodass der Schiebedachdeckel über die Antriebsschiene geführt ist. Die Antriebsschiene muss jedoch massiv ausgeführt sein, um auf den Schiebedachdeckel wirkende Drehmomente aufzufangen.

Die DE 10 2012 104280 A1 offenbart einen Schiebedachdeckel, wobei die hinteren Führungselemente in der Nähe der Mitte des Schiebedachdeckels angeordnet sind.

Die genannten Fahrzeugdächer haben außerdem den Nachteil, dass Führungen entlang der Dachöffnung verlaufen. Da die Führungen im Normalfall gerade und parallel zueinander verlaufen müssen, legt dies auch die mögliche Geometrie der Seitenränder der Dachöffnung fest. Somit können die Seitenränder nicht einer schräg verlaufenden Kontur des seitlichen Dachaufbaus folgen, was die designerische Freiheit erheblich einschränkt.

Aufgabe der Erfindung ist daher, Nachteile des Standes der Technik zu überwinden und eine alternative Lösung mit anderen Vorteilen zu schaffen. Gegenstand der Erfindung ist ein öffenbares Fahrzeugdach, bei dem Führungselemente an dem Schiebedachdeckel befestigt und in Bezug auf eine Längsrichtung des Fahrzeugs nahe einer Mitte des Schiebedachdeckels oder in dieser Mitte angeordnet sind. Vorzugsweise ist das hintere Ende des Schiebedachdeckels in keiner Stellung des Schiebedachdeckels geführt. Vorzugsweise ist am hinteren Ende des Schiebedachdeckels kein Führungselement angeordnet.

Das Fehlen der Führung am hinteren Ende des Schiebedachdeckels ermöglicht, dass dessen hinteres Ende erheblich auskragt. Auf diese Weise wird ein weites Öffnen der Schiebedachöffnung ermöglicht. Dies wird dadurch unterstützt, dass sich die Führung des Schiebedachdeckels nach hinten bis über die Schiebedachöffnung hinaus erstreckt. Gegenüber einer Spoiler-Mechanik, bei welcher eine noch erheblich größere Auskragung realisiert ist, indem die Führungselemente vorn am Schiebedachdeckel befestigt sind, ergibt sich daher eine verbesserte Stabilität des Schiebedachdeckels im geöffneten Zustand bzw. weniger hohe Anforderungen an die Tragkraft der Führung.

Alle Führungselemente sind an dem Schiebedachdeckel in einem Bereich um die Mitte des Schiebedachdeckels in Bezug auf eine Längsrichtung des Fahrzeugs angeordnet, wobei der Bereich nicht bis in die Nähe des vorderen oder hinteren Randes des Schiebedachdeckels reicht.

Insbesondere beginnen die Führungen nicht am vorderen seitlichen Ende der Dachöffnung. Typischerweise beginnen sie, in Längsrichtung des Fahrzeugs gesehen, in einem Bereich in der Nähe der Mitte der Öffnung, der jedoch nicht bis zum vorderen Ende der Dachöffnung reicht. Dadurch ergibt sich für den vorderen Teil des Seitenrandes der Dachöffnung eine erhebliche Verbesserung der designerischen Freiheit.

Bevorzugt umfasst das Fahrzeugdach zwei zueinander beabstandete Führungselemente auf jeder Seite des Schiebedachdeckels.

Die Unteransprüche zeigen bevorzugte Ausführungsformen der Erfindung.

In einer Ausführungsform sind die Führungen gerade ausgeführt und in einem Dachabschnitt angeordnet, in dem die Seitenwand im Bereich des Dachaufbaus des Fahrzeugs in einem Winkel zur Längsrichtung des Fahrzeugs verläuft, der kleiner ist als ein solcher Verlaufswinkel der Seitenwand des Dachaufbaus an dem vorderen Ende der Dachöffnung. Da die Führungen nicht an dem vorderen Ende der Dachöffnung verlaufen müssen, kann die Form des Randes der Dachöffnung parallel zu der Seitenwand des Fahrzeugs am Dachaufbau verlaufen, insbesondere schräg zu den Führungen und zur Längsrichtung des Fahrzeugs.

Die Seitenränder der Dachöffnung können somit auch einem Verlauf von Fugen in dem Dach zumindest parallel folgen, was designerisch gewollt sein kann.

In einer weiteren Ausführungsform des Fahrzeugdaches weist dieses einen feststehenden hinteren Deckel auf, der ein mittragender Teil des Fahrzeugdaches ist. Dies ist möglich, weil die Führungen seitlich von diesem hinteren Deckel nicht bis zum Ende des Deckels reichen müssen, wie dies bei Varianten eines Panorama-Daches erforderlich ist. Der Deckel ist bevorzugt teilweise oder vollständig transparent ausgeführt.

In einer weiteren Ausführungsform ist der Schiebedachdeckel und vorzugsweise auch der hintere Deckel zusammen mit der Bewegungsmechanik von oben in das Dach einsetzbar, wobei die gesamte Einheit durch einen gemeinsamen Rahmen gehalten sein kann, welcher in das Dach einsetzbar ist.

Gemäß der Erfindung ist die Führung in einen vorderen Abschnitt und einen hinteren Abschnitt unterteilt. Das vordere Ende des vorderen Abschnitts ist dabei weiter in Richtung der Fahrzeugfront angeordnet, als das vordere Ende des hinteren Abschnitts. Diese Unterteilung gilt für beide Führungen, von denen jeweils eine an einer Seite der Dachöffnung angeordnet ist. In der geschlossenen Stellung ist in jedem Abschnitt der Führungen ein dem Abschnitt zugeordnetes Führungselement angeordnet. Jeder Abschnitt umfasst eine Kulissensektion, bei deren Durchlaufen ein Führungselement zusammen mit dem Schiebedachdeckel angehoben wird.

In einer weiteren Ausführungsform überlappen sich der vordere und der hintere Abschnitt der Führung in Fahrzeuglängsrichtung in einem Überlappungsabschnitt. Dabei verbleibt jedes Führungselement in einem ihm zugeordneten Abschnitt. Durch den Überlappungsabschnitt können die Führungselemente dem Schiebedachdeckel nah beieinander angeordnet sein, ohne dass sie in demselben Abschnitt der Führung laufen müssen.

In einer weiteren Ausführungsform ist der vordere Abschnitt unterhalb des Schiebedachdeckels in dessen geschlossenem Zustand und somit im Inneren des Fahrzeugs angeordnet, vorzugsweise vollständig. Der hintere Abschnitt kann auch im Äußeren des Fahrzeugs verlaufen, ebenfalls vorzugsweise vollständig.

In einer weiteren Ausführungsform sind, damit sie nicht kollidieren oder sich kreuzen, die beiden Abschnitte der Führung zueinander versetzt angeordnet. Die Führungselemente können dann in ihrem jeweiligen Abschnitt verbleiben. Der hintere Abschnitt kann weiter zur Fahrzeugseite hin angeordnet sein als der vordere Abschnitt. Insbesondere ist der hintere Abschnitt seitlich neben einem hinteren Deckelelement angeordnet. Dies ermöglicht, dass keine Führung in dem hinteren Deckel verläuft. Dies kann vorteilhaft sein, wenn dieser aus Glas hergestellt ist. Der hintere Abschnitt kann alternativ oder zusätzlich weiter oben im Fahrzeugdach angeordnet sein. Ein Abschnitt der Führung kann im Äußeren des Fahrzeugs verlaufen. Ein außenliegender Abschnitt kann in einer im Äußeren des Dachs verlaufenden Führungsfuge angeordnet sein, was für alle Ausführungsformen denkbar ist. Eine solche Führungsfuge kann durch ein Dichtungselement abgedichtet sein. Das Dichtungselement kann von dem Führungselement in der Fuge bzw. seiner Verbindung zum Schiebedachdeckel derart verdrängt werden, dass sich das Führungselement entlang der Führung in der Fuge bewegen kann. Es ist denkbar, dass ein Abschnitt oder auch eine ganze Führung teilweise im Inneren des Fahrzeugs und teilweise im oder am Äußeren des Fahrzeugs verläuft, wobei der Abschnitt oder die Führung im oder am Äußeren des Fahrzeugs vorzugsweise von dem beschriebenen Dichtungselement geschützt ist. Dies kann zugleich verhindern, dass Wasser vom Äußeren ins Innere dringt.

In einer weiteren Ausführungsform wird vorgeschlagen, dass ein Führungselement beim Öffnen des Schiebedachs von dem vorderen Abschnitt in den hinteren Abschnitt der Führung übergeht. Dann sind die Abschnitte dazu eingerichtet, dass ein Führungselement entlang beider Abschnitte einer Führung laufen kann, und verwirklichen somit insbesondere einen gleichartigen Führungsmechanismus mit gleichen Abmessungen, die zum Führen eines Elements relevant sind. Insbesondere fluchten der vordere und der hintere Abschnitt miteinander.

In einer weiteren Ausführungsform verläuft die Führung bis unter den hinteren Deckel. Dabei umgreifen die Führungselemente oder ihre Verbindungen mit dem Schiebedachdeckel den hinteren Deckel seitlich. Dazu ist vorzugsweise eine Fuge seitlich des hinteren Deckels vorgesehen.

Beim Öffnen des Fahrzeugdachs sind die Führungselemente in Kulissen führbar, die beim Öffnen aufwärts durchlaufen werden können, wobei der Schiebedachdeckel aus der Flucht der Dachaußenfläche die Führungselemente abhebt. Jedem Führungselement ist seine eigene Kulisse zugeordnet, die jeweils ein Teil eines vorderen oder eines hinteren Abschnitts der Führung ist. Die Kulissen können hauptsächlich der Führung dienen, während die Kraft zum Anheben im Wesentlichen von einer davon unabhängigen Anhebeeinrichtung stammt.

In einer weiteren Ausführungsform ist der Schiebedachdeckel mittels eines Antriebsmechanismus antreibbar, der entlang einer Antriebsschiene wirkt, die in der Dachöffnung in Fahrzeuglängsrichtung verläuft, insbesondere, in Querrichtung des Fahrzeugs gesehen, in der Mitte der Dachöffnung. Der Schiebedachdeckel ist insbesondere an wenigstens einer vorderen und einer hinteren Befestigungsstelle an dem Antriebsmechanismus befestigt, wobei mit einer Bewegung des Antriebsmechanismus in Richtung des Fahrzeughecks insbesondere ein Anheben des Schiebedachdeckels bewirkt werden kann. Denkbar ist weiter, dass ein vorderer Teil des Schiebedachdeckels, der in Richtung der Front des Fahrzeugs angeordnet ist, entlang der Führung zunächst im Wesentlichen parallel zur Dachoberfläche geführt wird, während ein hinterer, die Hinterkante des Schiebedachdeckels umfassender Teil des Schiebedachdeckels zunächst angehoben wird, bevor er sich in Richtung des Fahrzeughecks bewegt. Denkbar ist auch, den Schiebedachdeckel zunächst insgesamt anzuheben. Auf beide genannten Arten kann eine Lüfterstellung des Schiebedachs bewirkt werden, in der das Dach angehoben, jedoch höchstens unwesentlich verschoben ist. Dadurch ist ein Luftzutritt durch einen Spalt im Fahrzeugdach möglich. Vorzugsweise ist die Antriebsschiene mit genau einer Führung versehen. Bekannte Antriebsschienen für Schiebedächer haben dagegen zwei Führungen, um Drehmomente auf den Schiebedachdeckel besser auffangen zu können. Die Drehmomentabstützung wird jedoch in der vorgeschlagenen Ausführungsform durch die erfindungsgemäß an dem Schiebedachdeckel angeordneten Führungselemente geleistet.

In einer weiteren Ausführungsform ist das Anheben des Schiebedachdeckels mittels der Antriebsschiene bewirkbar, indem mittels eines Hebemechanismus, mit dem eine Befestigungsstelle des Antriebs an dem Schiebedachdeckel verbunden ist, insbesondere eine hintere Befestigungsstelle, der Abstand der zwischen der Antriebsschiene und dem Schiebedachdeckel vergrößerbar ist, beispielsweise durch Drehen eines Hebels, der die Verbindung zwischen der Antriebsschiene und der Befestigungsstelle darstellt. Das Drehen des Hebels kann beispielsweise bewirkt werden, indem eine Bewegung des Hebels entlang der Führung der Antriebsschiene verhindert wird, bis dieser eine vorgegebene Drehstellung erreicht hat. Dazu kann der Hebel mit einem Zug- oder Druckmittel des Antriebs verbunden sein, sodass ein Drehmoment auf den Hebel ausgeübt werden kann. Alternativ oder zusätzlich kann eine Führungsbahn an oder in der Antriebsschiene vorgesehen sein, die in einer Hebesektion aufwärts verläuft, sodass ein Verbindungselement, das eine Befestigungsstelle, insbesondere eine vordere Befestigungsstelle, mit der Antriebsschiene verbindet, beim Durchlaufen der Hebesektion aufwärts bewegbar ist und dadurch die Befestigungsstelle anhebbar ist. Zugleich kann außerdem der Hebel gekippt werden.

In einer weiteren Ausführungsform ist die hintere Befestigungsstelle von dem Hebemechanismus an- und abkoppelbar. Dies kann hilfreich sein, wenn beim Auffahren des Schiebedachs der Hebemechanismus mit anderen Elementen des Dachs kollidieren würde. Insbesondere kann dies der Fall sein, wenn ein Teil der Antriebsschiene unter einem hinter der Dachöffnung angeordneten Abschnitt des Dachs oder unter einem hinteren Deckel verläuft. Insbesondere kann das An- und Abkoppeln durch Eingreifen und Außereingrifftreten eines Riegelsteins bewirkt werden, der den Hebemechanismus mit dem Schiebedachdeckel verbindet. Das Eingreifen und Außereingrifftreten kann beispielsweise realisiert sein, indem der Riegelstein des Hebemechanismus während des Bewegens des Schiebedachs eine andere Bahn beschreibt als der Schiebedachdeckel, derart, dass der Riegelstein in eine Aussparung in dem Schiebedachdeckel eintaucht oder sich aus dieser bewegt. Die unterschiedlichen Bahnen können erreicht werden, indem der Schiebedachdeckel in den Führungen seitlich der Dachöffnung geführt ist, während der Hebemechanismus der Führung der Antriebsschiene folgt.

In einer weiteren Ausführungsform weist das Fahrzeugdach zum Bewegen des Schiebedachdeckels einen Antrieb auf, der an zumindest einer der Führungen und somit am seitlichen Rand oder in der Nähe des seitlichen Randes der Dachöffnung angeordnet ist. Dieser kann beispielsweise mit einem Spiralkabel realisiert sein. Bevor das Schiebedach parallel zum Fahrzeugdach geöffnet wird, kann es in eine Lüfterstellung bringbar sein.

In einer weiteren Ausführungsform ist unterhalb des Schiebedachdeckels eine Dichtung angeordnet, die dazu eingerichtet ist, zumindest entlang eines Teils der Bewegungsbahn des Schiebedachelements über den Bereich des Dachs oder entlang des hinteren Deckels zu gleiten, der sich in Fahrzeuglängsrichtung in Richtung des Hecks hinter der Schiebedachöffnung befindet. Auf diese Weise kann eine Geräuschminderung des Schiebedachs bewirkt werden. Außerdem bietet eine solche Dichtung Schutz vor Schwingungen des Schiebedachs, was für die Mechanik vorteilhaft ist.

Die Figuren im Anhang zeigen beispielhaft eine Ausführungsform der vorliegenden Erfindung. Es zeigen:
Figur 1 eine Draufsicht auf ein Fahrzeugdach mit geschlossenem Schiebedachdeckel,
Figur 2 dieselbe Draufsicht wie Figur 1 mit geöffnetem Schiebedachdeckel,
Figur 3 eine perspektivische Ansicht des Fahrzeugdachs in geschlossenem Zustand, wobei Dachteile, die die Mechanik des Schiebedachs verdecken, weggelassen sind,
Figur 4 dieselbe perspektivische Ansicht wie Figur 3, jedoch mit dem Schiebedachdeckel in Lüfterstellung,
Figur 5 dieselbe perspektivische Darstellung wie in Figur 4, jedoch mit dem Schiebedachdeckel in Zwischenstellung,
Figur 6 dieselbe perspektivische Darstellung wie Figur 5, jedoch mit vollständig geöffnetem Schiebedachdeckel,
Figur 7 einen Ausschnitt aus Figur 3 in perspektivischer Ansicht, welcher Details der Schiebedachmechanik vergrößert zeigt, wobei der Schiebedachdeckel in einer geschlossenen Stellung ist,
Figur 8 dieselbe perspektivische Darstellung wie Figur 7, jedoch mit dem Schiebedachdeckel in Lüfterstellung,
Figur 9 dieselbe perspektivische Darstellung wie in Figur 8, jedoch mit dem Schiebedachdeckel in Zwischenstellung,
Figur 10 dieselbe perspektivische Darstellung wie in Figur 9, jedoch mit vollständig geöffnetem Schiebedachdeckel,
Figur 11 eine perspektivische Darstellung einer Antriebsschiene für den Schiebedachdeckel, wobei den Mechanismus verdeckende weitere Teile des Fahrzeugdachs weggelassen sind, und wobei sich der Schiebedachdeckel in einer geschlossenen Stellung befindet,
Figur 12 dieselbe Darstellung wie in Figur 11, jedoch mit dem Schiebedachdeckel in Lüfterstellung,
Figur 13 dieselbe Darstellung wie in Figur 12, jedoch mit dem Schiebedachdeckel in Zwischenstellung,
Figur 14 dieselbe Darstellung wie in Figur 13, jedoch mit noch weiter geöffnetem Schiebedachdeckel als in Figur 13,
Figur 15 dieselbe Darstellung wie Figur 14, jedoch mit noch weiter geöffnetem, in Zwischenstellung befindlichem Schiebedachdeckel, und
Figur 16 dieselbe Darstellung wie in Figur 15, jedoch mit vollständig geöffnetem Schiebedachdeckel.

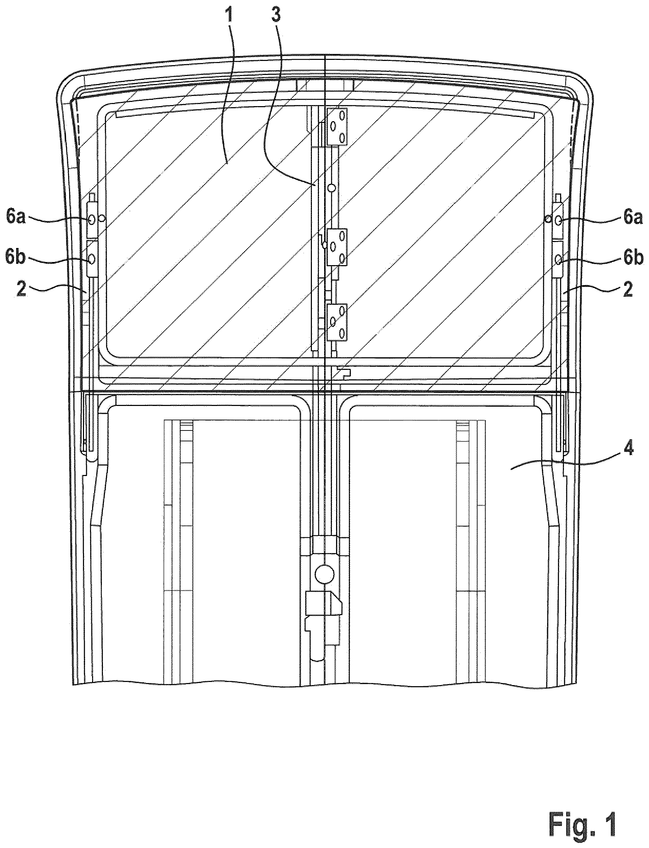

Figur 1 zeigt eine Draufsicht auf ein Fahrzeugdach mit einem Schiebedachdeckel 1. Der Schiebedachdeckel 1 ist in Führungen 2 geführt, welche im Wesentlichen parallel zu einer Längsrichtung des Fahrzeugs an den entsprechenden Seitenrändern des Schiebedachdeckels 1 angeordnet sind. Der Antrieb des Schiebedachdeckels 1 ist mit einer Antriebsschiene realisiert, welche ebenfalls in Längsrichtung des Fahrzeugs verläuft. In Querrichtung des Fahrzeugs gesehen, ist die Antriebsschiene 3 in der Mitte des Schiebedachdeckels 1 angeordnet. Die Antriebsschiene 3 ist im Inneren des Fahrzeugs angeordnet. Hinter dem Schiebedachdeckel 1 ist in Richtung des Fahrzeughecks ein hinterer Deckel 4 angeordnet, an dessen zur Fahrzeugseite gerichteten Seite ein Teil der Führungen 2 verläuft.

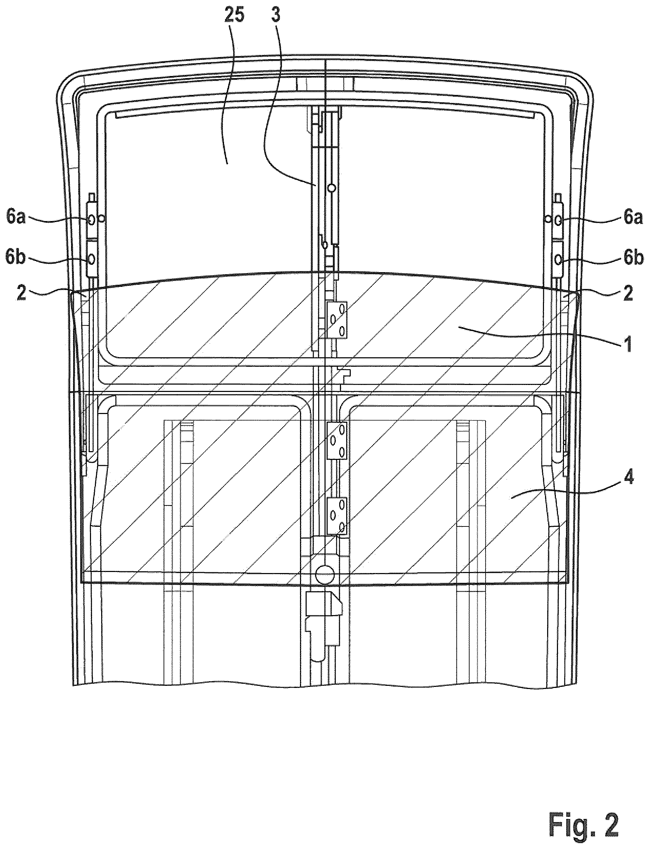

Figur 2 zeigt dieselbe Draufsicht wie Figur 1, jedoch mit geöffnetem Schiebedachdeckel 1. In Figur 2 ist deutlich zu erkennen, dass der seitliche Rand des Schiebedachdeckels 1 in seinem vorderen Bereich gegenüber der Längsrichtung des Fahrzeugs deutlich geneigt ist. Er folgt dem Verlauf der Seite des Dachaufbaus, der durch die Form der Fensterscheiben der Türen hinter der A-Säule bzw. deren Rahmen bestimmt wird. Die Dachöffnung 25 ist deutlich zu erkennen.

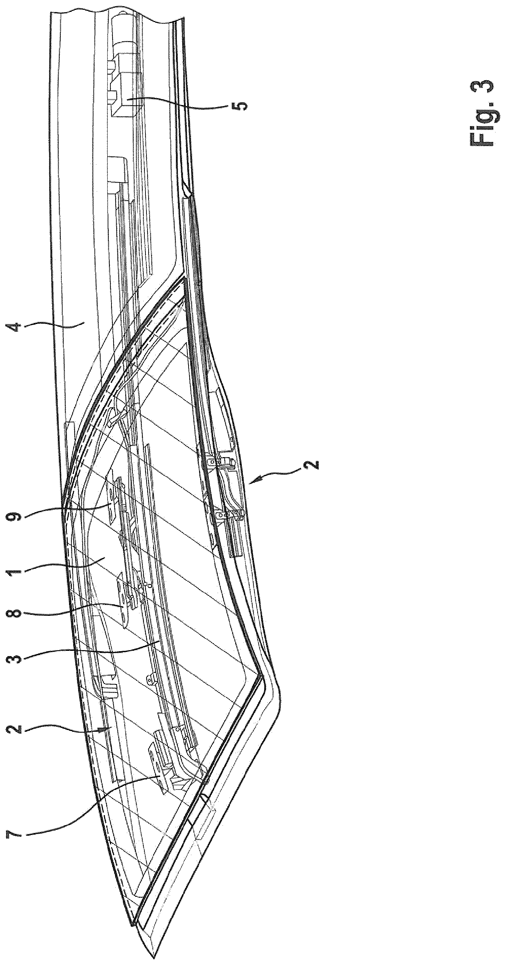

Figur 3 zeigt eine perspektivische Darstellung eines Teils eines Fahrzeugdachs, wobei Teile weggelassen sind, die eine Führungsmechanik für den Schiebedachdeckel 1 verdecken. Der Schiebedachdeckel 1 befindet sich in geschlossenem Zustand. Die Führungsmechanik für den Schiebedachdeckel 1 umfasst die beiden Führungen 2, die unterhalb des Schiebedachdeckels 1 an dessen beiden Längsseiten in Fahrzeugrichtung angeordnet sind. Unter dem hinteren Deckel 4 ist ein Antriebsmotor 5 für die Antriebsschiene 3 angeordnet.

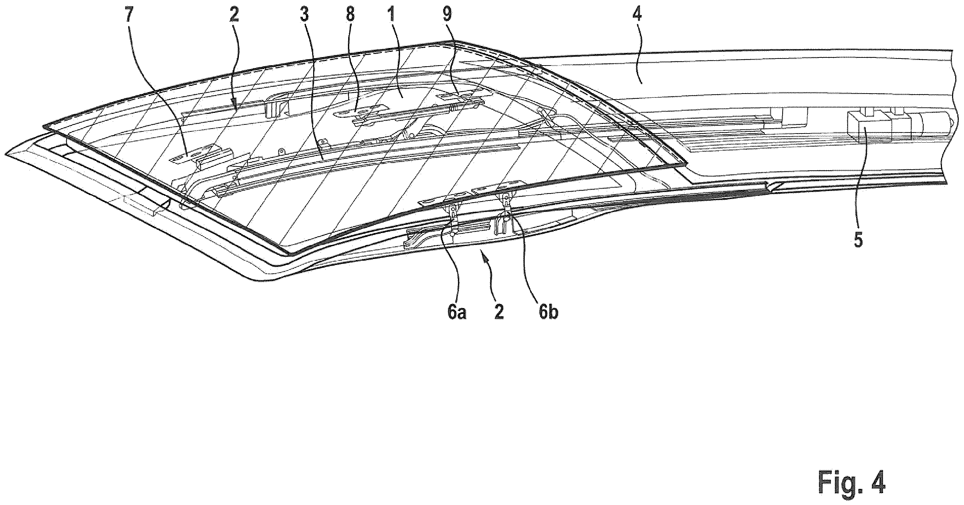

Figur 4 zeigt dieselbe perspektivische Darstellung wie Figur 3, jedoch befindet sich der Schiebedachdeckel in einer Lüfterstellung. Dabei ist die zur Fahrzeugfront gerichtete Seite des Schiebedachdeckels 1 weniger stark geöffnet, als dessen zum Fahrzeugheck gerichtete Seite. In Figur 4 ist gut zu erkennen, dass die dem Betrachter zugewandte Seite des Schiebedachdeckels 1 durch zwei Führungselemente 6a und 6b mit der Führung 2 verbunden ist. Die Führungselemente 6a und 6b befinden sich etwa in der Mitte des Schiebedachdeckels 1. Der Schiebedachdeckel 1 ist im Vergleich zu der geschlossenen Stellung in Figur 3 nur unwesentlich in Richtung des Fahrzeughecks verschoben. Durch das Anheben des Schiebedachdeckels 1 entsteht an dessen Rand ringsum ein Lüftungsspalt. Der Antrieb und das Anheben des Schiebedachdeckels 1 erfolgt über Befestigungspunkte 7, 8 und 9, an weichen der Schiebedachdeckel 1 mit Teilen der Antriebsschiene 3 verbunden ist.

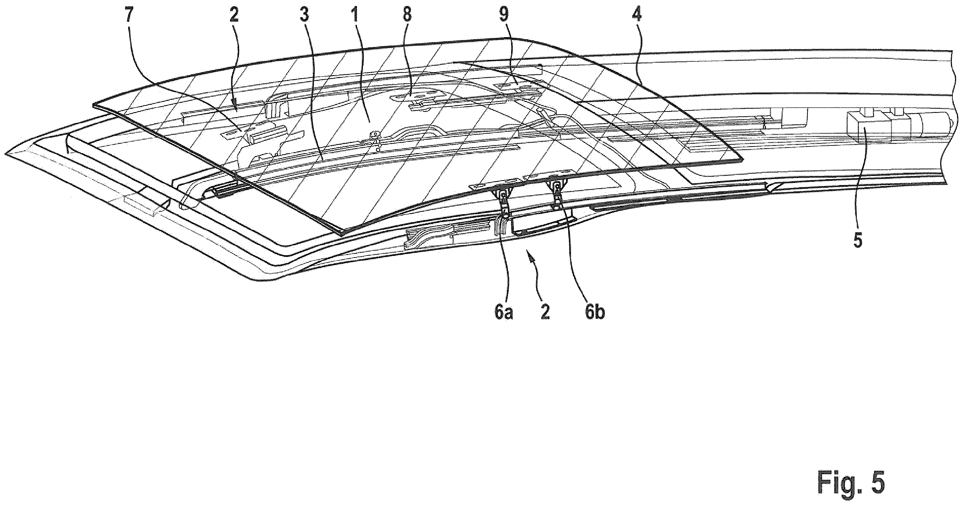

Figur 5 zeigt dieselbe perspektivische Ansicht wie Figur 4, jedoch ist der Schiebedachdeckel 1 in einer halb geöffneten Zwischenstellung. Die Führungselemente 6a und 6b sind in ihrer Führung 2 deutlich in Richtung des Fahrzeughecks verschoben. Die Neigung des Schiebedachdeckels 1 nach vorne-unten ist geringer und vor allem der nach vorne-unten gebogenen Form des Schiebedachdeckels 1 geschuldet.

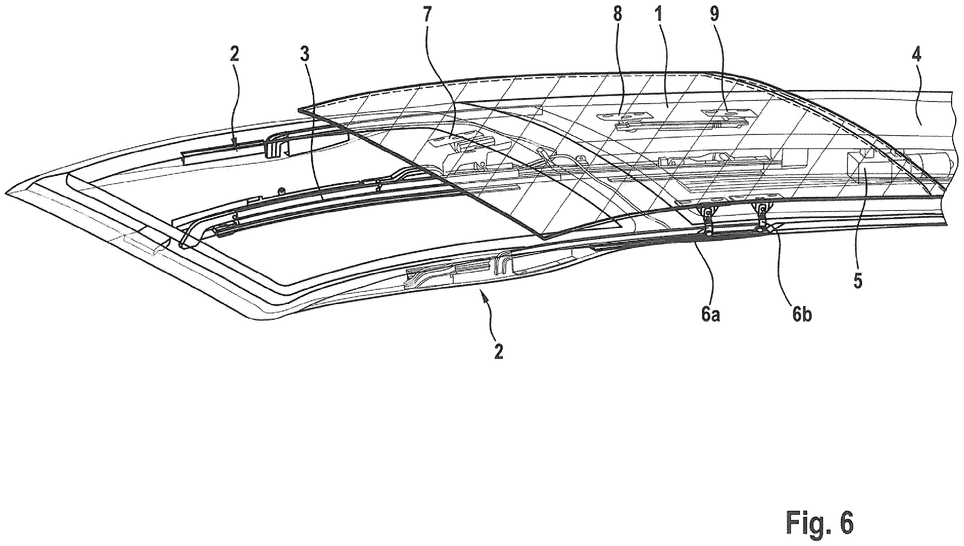

Figur 6 zeigt dieselbe perspektivische Darstellung wie Figur 5, jedoch mit vollständig geöffnetem Schiebedachdeckel 1. Das Führungselement 6b ist bis an das hintere Ende der Führung 2 verschoben.

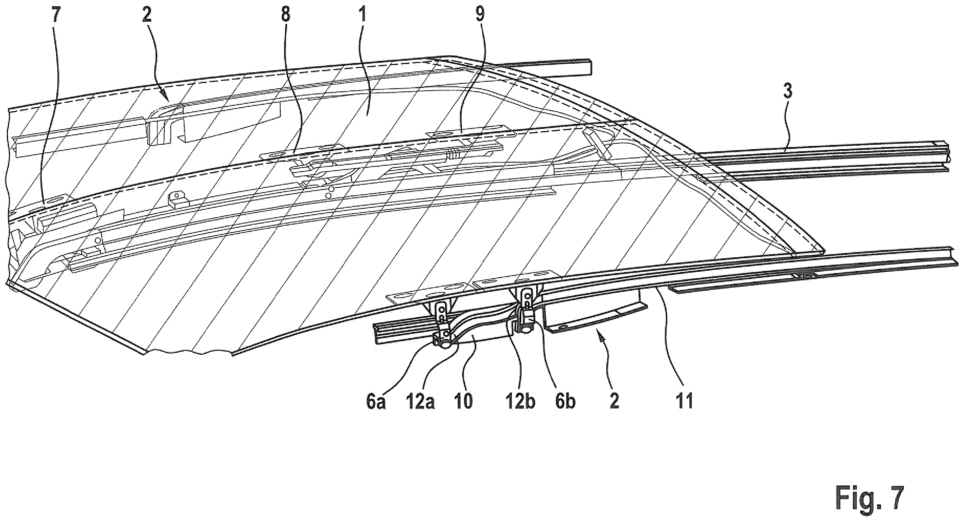

Figur 7 zeigt in perspektivischer Darstellung eine vergrößerte Ansicht der Führung 2, wobei Teile des Fahrzeugdachs weggelassen sind, die die Führung 2 verdecken würden. Figur 7 zeigt den Schiebedachdeckel 1 in geschlossener Stellung. Das vordere Führungselement 6a befindet sich in einer Kulisse 12a eines vorderen Abschnitts 10 der Führung 2. Das hintere Führungselement 6b befindet sich in einer Kulisse 12b eines hinteren Abschnitts 11 der Führung 2. Durch die Position der Führungselemente 6a und 6b im vorderen-unteren Ende ihrer jeweiligen Kulissensektionen 12a, 12b befindet sich der Schiebedachdeckel 1 in einer abgesenkten Position.

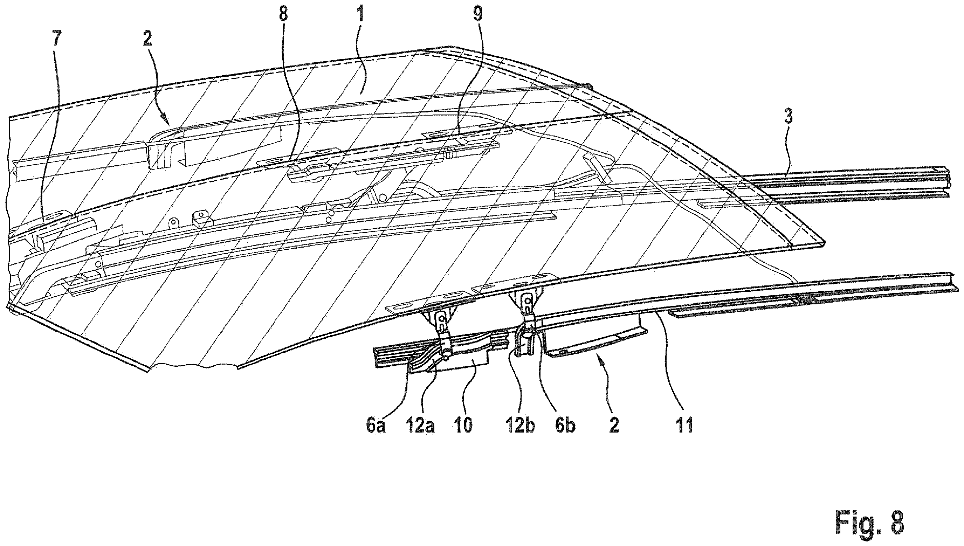

Figur 8 zeigt dieselbe Darstellung wie Figur 7, jedoch ist der Schiebedachdeckel 1 in seiner Lüfterstellung. Im Unterschied zu Figur 7 sind die Führungselemente 6a, 6b am oberen Ende ihrer jeweiligen Kulissensektion 12a, 12b angeordnet. Dies geht mit der angehobenen Stellung des Schiebedachdeckels 1 einher. Die Anhebung in der Kulissensektion 12a ist jedoch geringer als die Anhebung in der Kulissensektion 12b, sodass der Schiebedachdeckel 1 leicht nach vorne-unten geneigt ist. Im weiteren Verlauf der Führungsbahn in dem vorderen Abschnitt 10 der Führung 2 wird beim weiteren Öffnen des Schiebedachdeckels 1 das vordere Führungselement 6a weiter angehoben, sodass, nachdem der vordere Abschnitt 10 durchlaufen wurde, der Schiebedachdeckel 1 im Wesentlichen parallel zu der Außenoberfläche des Dachs steht.

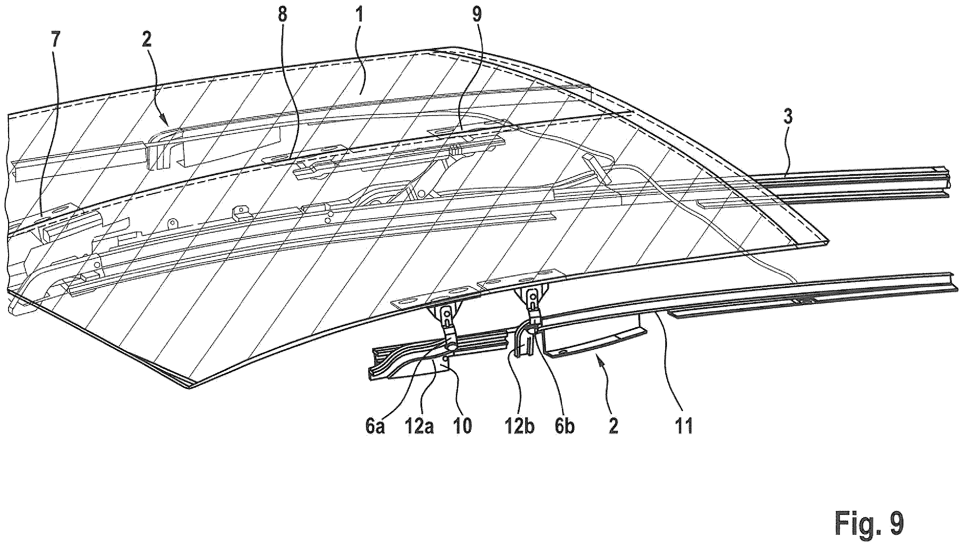

Figur 9 zeigt dieselbe perspektivische Darstellung wie Figur 8, jedoch mit dem Schiebedachdeckel 1 in einer teilweise geöffneten Zwischenstellung. Dazu haben die Führungselemente 6a und 6b den vorderen bzw. hinteren Abschnitt 10 bzw. 11 in Richtung des Fahrzeughecks ein Stück weit durchlaufen. Die Anhebung der Führungselemente 6a und 6b erreicht im Wesentlichen dasselbe Ausmaß, sodass der Schiebedachdeckel 1 wenigstens näherungsweise parallel zu dem Fahrzeugdach angeordnet ist. Zwischen der in Figur 9 nicht dargestellten Umrandung der Dachöffnung 25 und der Vorderseite des Schiebedachdeckels 1 ist eine Öffnung in Längsrichtung des Fahrzeugs vorhanden.

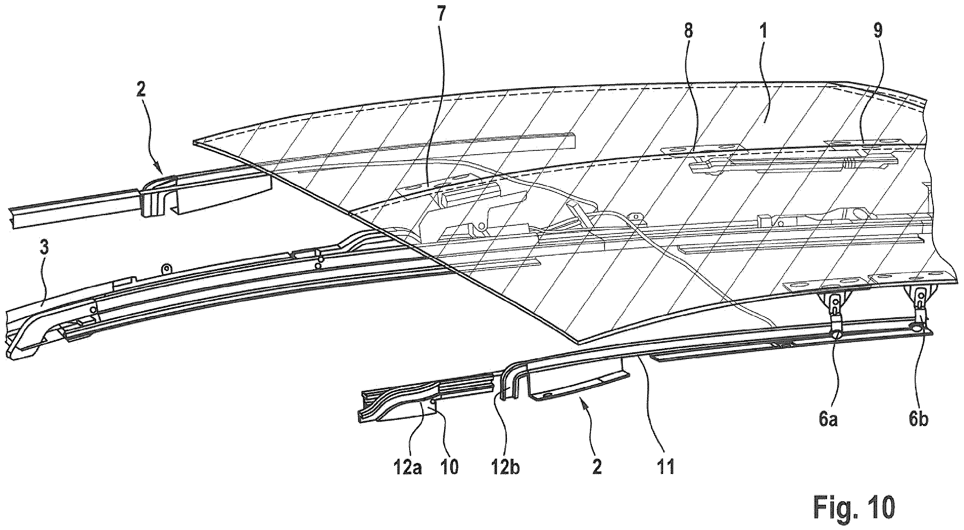

Figur 10 zeigt näherungsweise dieselbe perspektivische Ansicht wie Figur 9, wobei jedoch der vordere Abschnitt 10 der Führung 2 auf der dem Betrachter zugewandten Seite weggelassen ist und sich der Schiebedachdeckel 1 in einer vollständig geöffneten Stellung befindet. Die Führungselemente 6a und 6b befinden sich beide in der hinteren Führung 11. Das hintere Führungselement 6b ist bis zu dem hinteren Ende des hinteren Abschnitts 11 vorgeschoben. Die Öffnung zwischen der zur Fahrzeugfront gerichteten Vorderkante des Schiebedachdeckels 1 und dem in Figur 10 nicht dargestellten Rand der Dachöffnung 25 ist maximal.

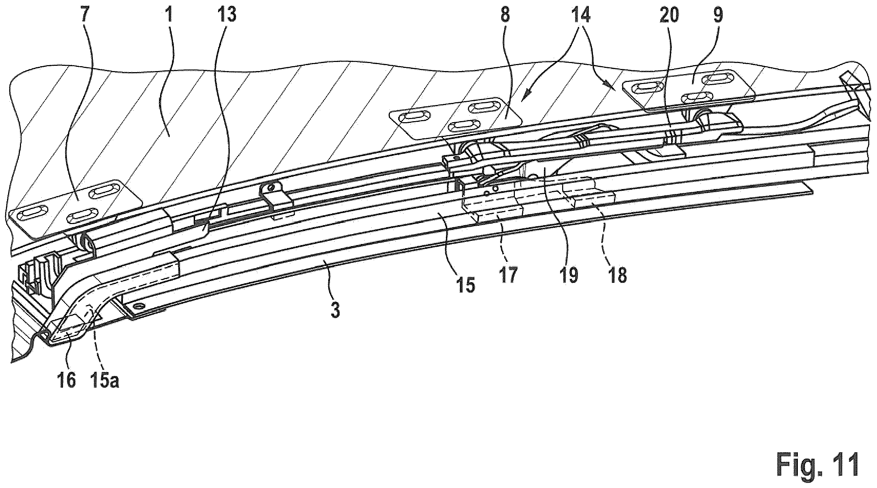

Figur 11 zeigt in einer perspektivischen Darstellung ein vergrößertes Detail der Antriebsschiene 3. Darin sind der Schiebedachdeckel 1 geschnitten sowie die unter den Befestigungsstellen 7, 8 und 9 angeordneten Verbindungen 13, 14 zwischen den Befestigungsstellen 7, 8 und 9 und der Antriebsschiene 3 dargestellt. Die Antriebsschiene 3 stellt neben den Kräften zum Bewegen des Schiebedachdeckels 1 in Richtung der Fahrzeugfront oder in Richtung des Fahrzeughecks auch Kräfte zum Anheben des Schiebedachdeckels 1 bereit. Alle Kräfte werden über wenigstens eine der Verbindungen 13, 14 zwischen der Antriebsschiene 3 und dem Schiebedachdeckel 1 übertragen. Innerhalb der Antriebsschiene 3 verläuft eine Führungsbahn 15, in welcher drei Nutensteine 16, 17 und 18 laufen. Der Nutenstein 16 ist dem vorderen Befestigungspunkt 7 bzw. seiner Verbindung 13 zu der Antriebsschiene 3 zugeordnet. Die Verbindung 13 ist mit dem Nutenstein 16 verbunden. Die Nutensteine 17 und 18 gehören zu der hinteren Verbindung 14. Deren Abstand zueinander erlaubt die Einbringung eines Drehmoments in die Führung 15. Mit den hinteren Nutensteinen 17 und 18 ist ein Aufstellhebel 19 verbunden, welcher über einen Anschlusshebel 20 mit den Befestigungsstellen 8 und 9 verbunden ist. Der Aufstellhebel 19 befindet sich in einer Stellung, in der der Schiebedachdeckel 1 nicht angehoben ist. Der Nutenstein 16 befindet sich in einer Kulissensektion 15a der Führungsbahn 15, die im Vergleich zum Rest der Führungbahn 15 einen Verlauf nach schräg vorne-unten aufweist. In der gezeigten geschlossenen Stellung des Schiebedachdeckels 1 ist der Nutenstein 16 am unteren Ende der Kulissensektion 15a angeordnet, was der abgesenkten Position des Schiebedachdeckels 1 entspricht. Die abgesenkte Position des Nutensteins 16 am Ende der Kulissensektion 15a kann erreicht werden, indem der Antrieb der Antriebsschiene 3 den Nutenstein 16 direkt oder über Zwischenelemente entsprechend weit in Richtung der Fahrzeugfront schiebt.

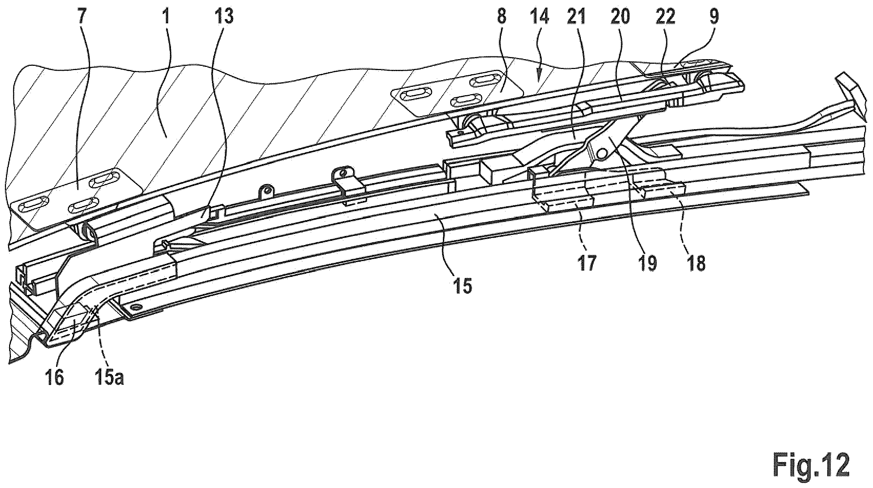

Figur 12 zeigt dieselbe perspektivische Darstellung wie Figur 11, wobei sich jedoch der Schiebedachdeckel 1 in der Lüfterstellung befindet. In dieser ist der Schiebedachdeckel 1 im Vergleich zu der in Figur 11 gezeigten geschlossenen Stellung des Schiebedachdeckels hinten angehoben. Die Befestigungsstelle 7 hat eine andere Winkelstellung, befindet sich jedoch sonst in derselben Position wie in Figur 11 dargestellt. Das Anheben des hinteren Endes wird durch ein Aufstellen des Aufstellhebels 19 bewirkt. Die Aufstellbewegung des Aufstellhebels 19 wird dadurch bewirkt, dass sich sein Ende, das drehbar mit den Nutensteinen 18 und 19 verbunden ist, mit den Nutensteinen 18 und 19 in Richtung des Fahrzeughecks bewegt, wobei der Aufstellhebel 19 mit einem Vorsprung zugleich in eine Aufstellkulisse 21 eingreift, sodass er während seiner Bewegung mit den Nutensteinen 18 und 19 von der feststehenden Aufstellkulisse 21 aufgerichtet wird. Diese Aufrichtbewegung wird über den Anschlusshebel 20 zu den Befestigungsstellen 8 und 9 übertragen. Die Aufstellbewegung bewirkt zugleich, dass ein Nutenstein 22 entlang des Anschlusshebels 20 gleitet, was wiederum bewirkt, dass der Schiebedachdeckel 1 der Bewegung der Nutensteine 17 und 18 in Richtung des Fahrzeughecks nicht präzise folgt. Dadurch kann der fester mit dem Schiebedachdeckel verbundene Nutenstein 16 an seiner Position am Ende der Kulissensektion 15a der Führung 15 verbleiben. Die in den Figuren 3 bis 10 dargestellten Führungselemente 6a und 6b werden in ihren Kulissensektionen 12a und 12b der Führung 2 durch das Aufstellen des Aufstellhebels 19 angehoben.

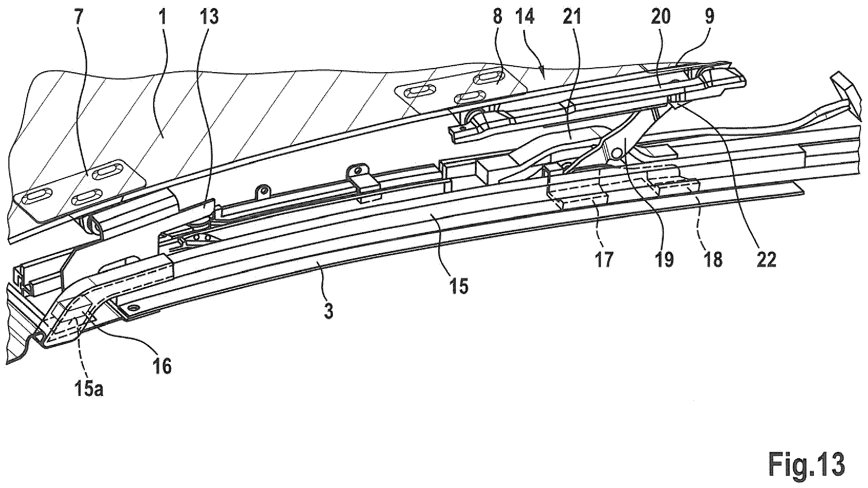

Figur 13 zeigt dieselbe perspektivische Ansicht wie Figur 12, wobei jedoch der Schiebedachdeckel 1 in Richtung des Fahrzeughecks verschoben ist. In dieser Position ist der Aufstellhebel 19 ebenso stark aufgestellt wie in der Figur 12. Außerdem bewegt sich der Nutenstein 16 am Ende der Kulissensektion 15a in Richtung oben-hinten. Dadurch wird der vordere Teil des Schiebedachdeckels 1 ebenfalls angehoben.

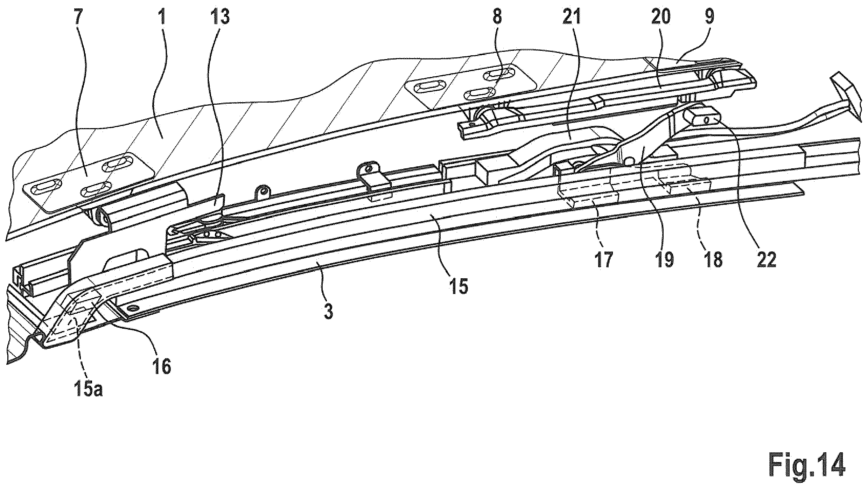

Figur 14 zeigt dieselbe perspektivische Ansicht wie Figur 13, wobei jedoch der Schiebedachdeckel 1 noch weiter in Richtung des Fahrzeughecks bewegt ist als in Figur 13. Der Aufstellhebel 19 hat die Aufstellkulisse 21 weiter durchlaufen, sodass er in einen Abschnitt der Kulisse 21 gelangt, in dem die Aufstellkulisse 21 nach unten verläuft. Dementsprechend senkt sich der Aufstellhebel 19 ab, wobei ein damit verbundener Riegelstein 22 mit dem Anschlusshebel 20 außer Eingriff tritt. Die Verbindung 14 ist damit aufgehoben. Der Antrieb des Schiebedachdeckels 1 erfolgt nun über die Verbindung 13 und die Befestigungsstelle 7. Nachdem das Anheben des Schiebedachdeckels 1 mit dem Durchlaufen der aufwärts gerichteten Abschnitte der Aufstellkulisse 21 bewirkt wurde, übernehmen nun die Führungen 2 in Verbindung mit den Führungselementen 6a und 6b die Aufrechterhaltung der erhöhten Position des Schiebedachdeckels 1. Der Kulissenstein 16 ist in der Kulissensektion 15a weiter nach oben-hinten gelaufen, sodass die Vorderkante des Schiebedachdeckels 1 weiter angehoben ist.

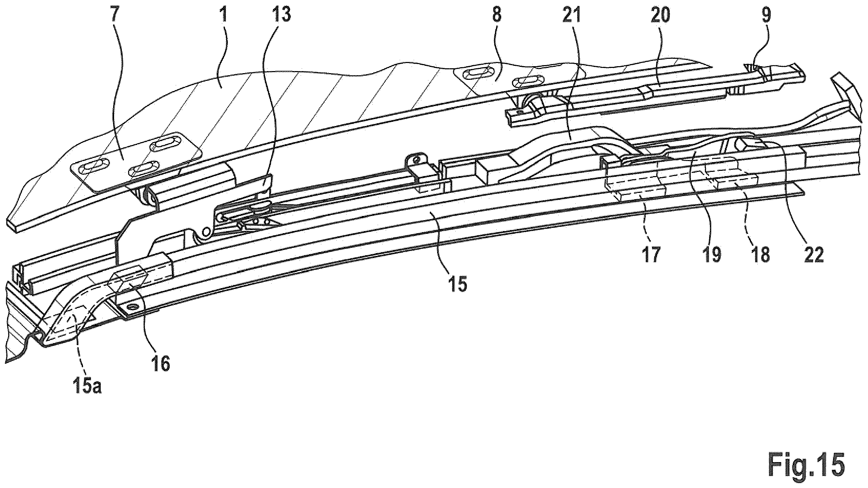

Figur 15 zeigt dieselbe perspektivische Darstellung wie Figur 14, wobei jedoch der Schiebedachdeckel 1 noch weiter in Richtung des Fahrzeughecks vorgeschoben ist, als in Figur 14. Der Kulissenstein 16 hat den Kulissenabschnitt 15a in dieser Stellung verlassen. Die Vorderkante des Schiebedachdeckels 1 ist nunmehr vollständig angehoben. Der Aufstellhebel 19 ist nahezu parallel zu der Führung 15 ausgerichtet, wobei der Riegelstein 22 weiter außer Eingriff mit dem Anschlusshebel 20 ist.

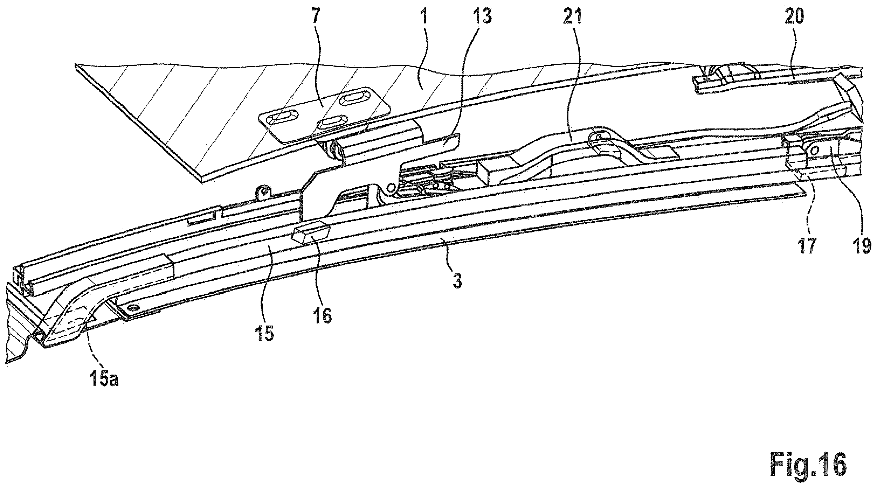

Figur 16 zeigt dieselbe perspektivische Ansicht wie Figur 15, wobei jedoch der Schiebedachdeckel 1 in eine vollständig geöffnete Position verfahren ist. Dementsprechend ist der Nutenstein 17 in der Figur 16 weit nach rechts verschoben. Der Nutenstein 16 hat sich erheblich von der Kulissensektion 15a und der Führungsbahn 15 entfernt. Der Aufstellhebel 19 ist aus der Aufstellkulisse 21 gelaufen und steht mit dieser nicht mehr im Eingriff. Er liegt weiterhin nahezu parallel zu der Führungsbahn 15.

### Bezugszeichenliste:

- 1: Schiebedachdeckel
- 2: Führung
- 3: Antriebsschiene
- 4: hinterer Deckel
- 5: Antriebsmotor
- 6a: vorderes Führungselement
- 6b: hinteres Führungselement
- 7: vordere Befestigungsstelle
- 8: vordere der hinteren Befestigungsstellen
- 9: hintere der hinteren Befestigungsstellen
- 10: vorderer Abschnitt der Führung
- 11: hinterer Abschnitt der Führung
- 12a: Kulissensektion des vorderen Abschnitts
- 12b: Kulissensektion des hinteren Abschnitts
- 13: vordere Verbindung
- 14: hintere Verbindung
- 15: Führungsbahn der Antriebsschiene
- 16: vorderer Nutenstein
- 17: vorderer der hinteren Nutensteine
- 18: hinterer der hinteren Nutensteine
- 19: Aufstellhebel
- 20: Anschlusshebel
- 21: Aufstellkulisse
- 22: Riegelstein
- 25: Dachöffnung

## Patentansprüche

1. Öffenbares Fahrzeugdach
- mit einem Schiebedachdeckel (1), der in einem geschlossenen Zustand eine Dachöffnung (25) verschließend angeordnet ist, wobei die Dachöffnung (25) in einem geöffneten Zustand des Dachs zumindest teilweise offen ist, indem der Schiebedachdeckel (1) zumindest teilweise außerhalb der Dachöffnung (25) angeordnet ist,
- wobei ein zum Fahrzeugheck gerichteter hinterer Rand des Schiebedachdeckels (1) im geschlossenen Zustand mit dem Äußeren des Fahrzeugdachs fluchtet und im geöffneten Zustand in Richtung des Fahrzeugäußeren aus der Flucht des Fahrzeugdachs angehoben ist,
- wobei das Fahrzeugdach zwei nicht mit dem Schiebedachdeckel verschiebbare Führungen (2) zum Verschieben des Schiebedachdeckels (1) aufweist, die wenigstens näherungsweise parallel zueinander und in Längsrichtung des Fahrzeugs angeordnet sind, wobei die Führungen (2) jeweils an einem oder in der Nähe eines der in Fahrzeuglängsrichtung verlaufenden Seitenränder des Schiebedachdeckels (1) angeordnet sind, wobei die Führungen (2) zumindest abschnittsweise von der Dachöffnung (25) aus in Richtung des Fahrzeughecks verlaufen, und
- wobei entlang der Führungen (2) mit dem Schiebedachdeckel (1) bewegte Führungselemente (6a, 6b) führbar sind, und
- wobei die Führungselemente (6a, 6b) in der Nähe einer Mitte des Schiebedachdeckels (1) in Bezug auf eine Längsrichtung des Fahrzeugs oder in dieser Mitte angeordnet sind,
**dadurch gekennzeichnet, dass**
die Führung (2) einen vorderen und einen hinteren Abschnitt (10, 11) umfasst, wobei der vordere Abschnitt (10) weiter in Richtung der Fahrzeugfront beginnt als der hintere Abschnitt (11), und
- dass beim Öffnen des Fahrzeugdachs die Führungselemente (6a, 6b) in Kulissensektionen (12a, 12b) führbar sind, die beim Öffnen aufwärts durchlaufbar sind, wobei der Schiebedachdeckel (1) aus der Flucht der Dachaußenfläche zusammen mit den Führungselementen (6a, 6b) anhebbar ist, wobei jedem Führungselement (6a, 6b) seine eigene Kulissensektion (12a, 12b) zugeordnet ist, die jeweils ein Teil eines vorderen Abschnitts (10) oder eines hinteren Abschnitts (11) der Führung (2) ist.

2. Fahrzeugdach nach Anspruch 1, **dadurch gekennzeichnet, dass** die Führungen (2) gerade ausgeführt sind und die Führungen (2) in einem Dachabschnitt angeordnet sind, in dem eine Seitenwand des Fahrzeugs im Bereich des Dachaufbaus eine geringere Neigung zur Längsrichtung des Fahrzeugs aufweist als an dem vorderen Ende der Dachöffnung (25).

3. Fahrzeugdach nach einem der vorangehenden Ansprüche, **dadurch gekennzeichnet, dass** hinter dem Dachausschnitt ein hinterer Deckel (4), insbesondere aus wenigstens teilweise transparentem Material, angeordnet ist, in dem die Führung nicht verläuft.

4. Fahrzeugdach nach einem der vorangehenden Ansprüche, **dadurch gekennzeichnet, dass** sich der vordere Abschnitt (10) und der hintere Abschnitt (11) bevorzugt in einem Überlappungsabschnitt in Bezug auf die Längsrichtung des Fahrzeugs überlappen.

5. Fahrzeugdach nach einem der vorangehenden Ansprüche, **dadurch gekennzeichnet, dass** der vordere Abschnitt (10) im geschlossenen Zustand des Schiebedachdeckels (1) unterhalb des Schiebedachdeckels (1) angeordnet ist.

6. Fahrzeugdach nach einem der vorangehenden Ansprüche, **dadurch gekennzeichnet, dass** der vordere Abschnitt (10) und der hintere Abschnitt (11) zueinander versetzt angeordnet sind, wobei insbesondere der hintere Abschnitt (11) weiter in Richtung des Fahrzeugäußeren und/oder weiter oben angeordnet ist als der vordere Abschnitt (10), und wobei insbesondere zumindest ein Bereich des hinteren Abschnitts (11) seitlich des hinteren Deckels (4) angeordnet ist.

7. Fahrzeugdach nach einem der vorangehenden Ansprüche, **dadurch gekennzeichnet, dass** das öffenbare Fahrzeugdach dazu eingerichtet ist, dass ein Führungselement (6a, 6b) von einer Führung durch den vorderen Abschnitt (10) auf eine Führung durch den hinteren Abschnitt (11) übergeht.

8. Fahrzeugdach nach einem der vorangehenden Ansprüche, **dadurch gekennzeichnet, dass** die Führung (2) bis unter den hinteren Deckel reicht, wobei die Führungselemente (6a, 6b) des Schiebedachdeckels (1) den hinteren Deckel (4) seitlich umgreifen.

9. Fahrzeugdach nach einem der vorangehenden Ansprüche, **dadurch gekennzeichnet, dass** der Schiebedachdeckel (1) mittels eines Antriebsmechanismus antreibbar ist, der entlang einer Antriebsschiene (3) wirkt, die in der Dachöffnung (25) in Fahrzeuglängsrichtung verläuft, insbesondere in der Mitte der Dachöffnung (25) in Querrichtung des Fahrzeugs, wobei der Schiebedachdeckel (1) insbesondere an wenigstens einer vorderen Befestigungsstelle (7) und einer hinteren Befestigungsstelle (8, 9) an dem Antriebsmechanismus befestigt ist, wobei insbesondere mit einer Bewegung des Antriebsmechanismus in Richtung des Fahrzeughecks der Antriebsmechanismus ein Anheben des Schiebedachdeckels (1) bewirkbar ist.

10. Fahrzeugdach nach Anspruch 9, **dadurch gekennzeichnet, dass** das Anheben des Schiebedachdeckels (1) mittels des Antriebsmechanismus bewirkbar ist, indem mittels eines Hebemechanismus, an dem eine Befestigungsstelle (7, 8, 9) angeordnet ist, insbesondere eine hintere Befestigungsstelle (8, 9), der Abstand der zwischen der Antriebsschiene (3) und dem Schiebedachdeckel (1) vergrößerbar ist und/oder eine Führungsbahn (15) an oder in der Antriebsschiene (3) in einer Kulissensektion (15a) aufwärts verläuft, sodass eine Verbindung (13, 14), die eine Befestigungsstelle (7, 8, 9), insbesondere eine vordere Befestigungsstelle (7), mit der Antriebsschiene (3) verbindet, beim Durchlaufen der Kulissensektion (15a) aufwärts bewegbar ist und dadurch die Befestigungsstelle (7, 8, 9) anhebbar ist.

11. Fahrzeugdach nach Anspruch 9 oder 10, **dadurch gekennzeichnet, dass** die hintere Befestigungsstelle (8, 9) von dem Hebemechanismus an- und abkoppelbar ist, insbesondere durch Eingreifen und Außereingrifftreten eines Riegelsteins (22).

12. Fahrzeugdach nach einem der vorangehenden Ansprüche, bei dem unterhalb des Schiebedachdeckels (1) eine Dichtung angeordnet ist, die dazu eingerichtet ist, zumindest entlang eines Teils einer Bewegungsbahn des Schiebedachelements (1) über einen Bereich des Dachs oder entlang des hinteren Deckels (4) zu gleiten, der sich in Fahrzeuglängsrichtung in Richtung des Hecks hinter der Dachöffnung (25) erstreckt.

## Claims

1. A retractable vehicle roof
- with a sliding sunroof (1), which is arranged in a closed state to close a roof opening (25), wherein the roof opening (25) is at least partially open when the roof is in an open state, in which the sliding sunroof (1) is arranged at least partially outside the roof opening (25),
- wherein a posterior edge of the sliding sunroof (1) directed toward the vehicle rear aligns with the exterior of the roof in a closed state and, in the open state, is moved out of alignment with the vehicle roof in the direction of the vehicle exterior,
- wherein the vehicle roof has two guides (2) for moving the sliding sunroof (1) that are not moveable with the sliding sunroof and which are arranged at least approximately parallel to one another and in the longitudinal direction of the vehicle, with the guides (2) each being arranged on or near to one of the side edges of the sliding sunroof (1) running in the longitudinal direction of the vehicle, wherein the guides (2) run, at least in sections, from the roof opening (25) in the direction of the vehicle rear, and
- wherein guide elements (6a, 6b) moved along the guides (2) with the sliding sunroof (1) can be guided, and
- wherein the guide elements (6a, 6b) are arranged near to a centre of the sliding sunroof (1) in relation to a longitudinal direction of the vehicle or in this centre,
**characterised in that**
the guide (2) comprises a front and rear section (10, 11), wherein the front section (10) starts further towards the front of the vehicle than the rear section (11), and that,
- when the vehicle roof is opened, the guide elements (6a, 6b)
can be guided in link sections (12a, 12b), which can be moved upward when opening, wherein the sliding sunroof (1) can be raised out of alignment with the exterior roof surface together with the guide elements (6a, 6b), each guide element (6a, 6b) being assigned its own link section (12a, 12b), which is in each case a part of a front section (10) or a rear section (11) of the guide (2).

2. A vehicle roof according to Claim 1, **characterised in that** the guides (2) are straight and the guides (2) are arranged in a roof section in which a side wall of the vehicle in the region of the roof structure has a smaller inclination in the longitudinal direction of the vehicle than at the front end of the roof opening (25).

3. A vehicle roof according to one of the preceding claims, **characterised in that** a rear cover (4) is arranged behind the roof cutout, in particular made of at least partially transparent material, in which the guide does not run.

4. A vehicle roof according to one of the preceding claims, **characterised in that** the front section (10) and the rear section (11) preferably overlap in an overlapping section with respect to the longitudinal direction of the vehicle.

5. A vehicle roof according to one of the preceding claims, **characterised in that** the front section (10) is arranged below the sliding sunroof (1) when the sliding sunroof (1) is in a closed state.

6. A vehicle roof according to one of the preceding claims, **characterised in that** the front section (10) and the rear section (11) are arranged displaced relative to one another, the rear section (11) being in particular arranged further towards the vehicle exterior and/or further up than the front section (10), and, in particular, at least one region of the rear section (11) being arranged to the side of the rear cover (4).

7. A vehicle roof according to one of the preceding claims, **characterised in that** the openable vehicle roof is arranged in such a way that a guide element (6a, 6b) passes from a guide through the front section (10) to a guide through the rear section (11).

8. A vehicle roof according to one of the preceding claims, **characterised in that** the guide (2) extends to below the rear cover, the guide elements (6a, 6b) of the sliding sunroof (1) embracing the rear cover (4) from the side.

9. A vehicle roof according to one of the preceding claims, **characterised in that** the sliding sunroof (1) can be driven by a drive mechanism acting along a drive rail (3) extending to the roof opening (25) in the longitudinal direction of the vehicle, in particular in the centre of the roof opening (25) in the transverse direction of the vehicle, the sliding sunroof (1) being fastened to the drive mechanism, in particular at at least one front fastening point (7) and one rear fastening point (8, 9), wherein the drive mechanism can raise the sliding sunroof (1) in particular with a movement of the drive mechanism in the direction of the vehicle rear.

10. A vehicle roof according to Claim 9, **characterised in that** the sliding sunroof (1) can be raised with the drive mechanism by means of a lifting mechanism on which a fastening point (7, 8, 9) is arranged, in particular a rear fastening point (8, 9), that the distance between the drive rail (3) and the sliding sunroof (1) is expandable and/or a guide track (15) runs upwards on or in the drive rail (3) in a link section (15a) so that a connection (13, 14) which connects a fastening point (7, 8, 9), in particular a front fastening point (7), to the drive rail (3) can be moved upwards when passing through the link section (15a), making the fastening point (7, 8, 9) raisable.

11. A vehicle roof according to Claim 9 or 10, **characterised in that** the rear fastening point (8, 9) can be coupled and uncoupled from the lifting mechanism, in particular through engagement and disengagement of a locking block (22).

12. A vehicle roof according to one of the preceding claims, in which a seal is arranged below the sliding sunroof (1), which seal is designed to slide over at least a part of a movement path of the sliding sunroof (1) across a region of the roof or along the rear cover (4), extending in the longitudinal direction of the vehicle in the direction of the rear behind the roof opening (25).

## Revendications

1. Toit de véhicule ouvrant comprenant :
un capot de toit coulissant (1) qui est installé de façon à fermer une ouverture du toit (25) à l'état fermé, l'ouverture du toit (25) étant au moins partiellement ouverte à l'état ouvert du toit, du fait que le capot de toit coulissant (1) est installé au moins partiellement à l'extérieur de l'ouverture du toit (25),
dans lequel,
le bord arrière du capot de toit coulissant (1), orienté vers l'arrière du véhicule, est à l'état fermé en alignement avec l'extérieur du toit du véhicule et est à l'état ouvert soulevé par rapport à un alignement avec le toit de véhicule en direction de l'extérieur du véhicule,
le toit du véhicule comporte deux organes de guidage (2) non susceptibles de coulisser avec le capot de toit coulissant pour permettre de faire coulisser le capot de toit coulissant (1), et positionnés au moins approximativement parallèlement l'un à l'autre dans la direction longitudinale du véhicule, les organes de guidage (2) étant respectivement installés sur ou à proximité d'un bord latéral du capot du toit coulissant (1) s'étendant dans la direction longitudinale du véhicule, les organes de guidage (2) s'étendant au moins par segments à partir de l'ouverture de toit (25) dans la direction de l'arrière du véhicule,
des éléments de guidage (6a, 6b) mobiles avec le capot de toit coulissant (1) peuvent être guidés le long des organes de guidage (2), et
les éléments de guidage (6a, 6b) sont situés à proximité du centre du capot de toit coulissant (1) par rapport à la direction longitudinale du véhicule ou au niveau de ce centre,
**caractérisé en ce que**
l'organe de guidage (2) comporte un segment avant et un segment arrière (10, 11), le segment avant (10) commençant plus loin en direction de l'avant du véhicule que le segment arrière (11), et
lors de l'ouverture du toit du véhicule, les éléments de guidage (6a, 6b) peuvent être guidés dans des sections de coulisse (12a, 12b) qui peuvent être traversées vers le haut lors de l'ouverture, le capot de toit pivotant (1) pouvant être soulevé de la position en alignement avec la surface externe du toit, ce avec les éléments de guidage (6a, 6b), à chaque élément de guidage (6a, 6b) étant associée une section de coulisse (12a, 12b) qui lui est propre, constituant respectivement une partie d'un segment avant (10) ou d'un segment arrière (11) de l'organe de guidage (2).

2. Toit de véhicule conforme à la revendication 1,
**caractérisé en ce que**
les organes de guidage (2) sont rectilignes et sont installés dans un segment de toit dans lequel une paroi latérale du véhicule présente dans la zone de la carrosserie du toit, une plus faible inclinaison par rapport à la direction longitudinale du véhicule qu'à l'extrémité avant de l'ouverture de toit (25).

3. Toit de véhicule conforme à l'une des revendications précédentes, **caractérisé en ce qu'**
à l'arrière de la découpe du toit est installé un capot arrière (4) en particulier en un matériau au moins partiellement transparent dans lequel ne s'étend pas l'organe de guidage.

4. Toit de véhicule conforme à l'une des revendications précédentes, **caractérisé en ce que**
le segment avant (10) et le segment arrière (11) se chevauchent de préférence dans un segment de chevauchement par rapport à la direction longitudinale du véhicule.

5. Toit de véhicule conforme à l'une des revendications précédentes, **caractérisé en ce qu'**
à l'état fermé du capot de toit coulissant le segment avant (10) est situé au-dessous de ce capot de toit coulissant (1).

6. Toit de véhicule conforme à l'une des revendications précédentes, **caractérisé en ce que**
le segment avant (10) et le segment arrière (11) sont décalés l'un par rapport à l'autre en particulier le segment arrière (11) est situé plus loin en direction de l'extérieur du véhicule et/ou plus loin vers le haut que le segment avant (10), et en particulier au moins une zone du segment arrière (11) est située à côté du capot arrière (4).

7. Toit de véhicule conforme à l'une des revendications précédentes, **caractérisé en ce qu'**
il est conçu de sorte qu'un élément de guidage (6a, 6b) passe d'un guidage par le segment avant (10) à un guidage par le segment arrière (11).

8. Toit de véhicule conforme à l'une des revendications précédentes, **caractérisé en ce que**
l'organe de guidage (2) se prolonge jusqu'au dessous du capot arrière, et les éléments de guidage (6a, 6b) du capot de toit coulissant (1) viennent latéralement en prise autour du capot arrière (4).

9. Toit de véhicule conforme à l'une des revendications précédentes, **caractérisé en ce que**
le capot de toit coulissant (1) peut être entraîné par un mécanisme d'entraînement qui agit le long d'un rail d'entraînement (3) qui s'étend dans l'ouverture de toit (25) dans la direction longitudinale du véhicule, en particulier au centre de l'ouverture de toit (25) dans la direction transversale du véhicule, et le capot de toit coulissant (1) est fixé sur le mécanisme d'entraînement, en particulier au niveau d'au moins un emplacement de fixation avant (7) et d'un emplacement de fixation arrière (8, 9) en particulier un déplacement du mécanisme d'entraînement en direction de l'arrière du véhicule permettant d'obtenir un soulèvement du capot de toit coulissant (1).

10. Toit de véhicule conforme à la revendication 9,
**caractérisé en ce que**
le soulèvement du capot de toit coulissant (1) peut être obtenu au moyen du mécanisme d'entraînement du fait qu'un mécanisme de levage sur lequel est monté un emplacement de fixation (7, 8, 9), en particulier un emplacement de fixation arrière (8, 9), permet d'augmenter la distance entre le rail d'entraînement (3) et le capot de toit coulissant (1) et/ou qu'une piste de guidage (15) située sur ou dans le rail d'entraînement (3) dans une section de coulisse (15a) s'étend vers le haut, de sorte qu'un organe de liaison (13, 14) qui relie un emplacement de fixation (7, 8, 9), en particulier, un emplacement de fixation avant (7) avec le rail d'entraînement (3), puisse être déplacé vers le haut lors de la traversée de la section de coulisse (15a), et ainsi soulever l'emplacement de fixation (7, 8, 9).

11. Toit de véhicule conforme à la revendication 9 ou 10,
**caractérisé en ce que**
l'emplacement de fixation arrière (8, 9) peut être couplé ou découplé du mécanisme de soulèvement en particulier par mise en prise et désengagement d'un bloc de verrouillage (22).

12. Toit de véhicule conforme à l'une des revendications précédentes, dans lequel,
en dessous du capot de toit coulissant (1) est installée une garniture d'étanchéité qui est réalisée de manière à glisser au moins le long d'une partie de la piste de déplacement de l'élément de toit coulissant (1) sur une zone du toit ou le long du capot arrière (4), qui s'étend vers l'arrière dans la direction longitudinale du véhicule à l'arrière de l'ouverture de toit (25).
